# FASCICULE DE BREVET EUROPEEN

(11) **EP 3 898 176 B1**
(45) Date de publication et mention de la délivrance du brevet: **25.01.2023**
(21) Numéro de dépôt: 19848787.8
(22) Date de dépôt: 19.12.2019
(51) Int. Cl.: B29C 49/42, B29C 49/64, B29K 67/00, B29L 31/00

(54) **DISPOSITIF DE CONVOYAGE DE PREFORMES ET PROCEDE DE COMMANDE D'UN TEL DISPOSITIF POUR INDEXER ANGULAIREMENT LES PREFORMES DANS UNE POSITION DE REFERENCE**
VORRICHTUNG ZUM FÖRDERN VON VORFORMEN UND VERFAHREN ZUR STEUERUNG SOLCH EINER VORRICHTUNG ZUR WINKELMÄSSIGEN INDEXIERUNG DER VORFORMEN IN EINER REFERENZPOSITION
DEVICE FOR CONVEYING PREFORMS AND METHOD FOR CONTROLLING SUCH A DEVICE IN ORDER TO ANGULARLY INDEX THE PREFORMS IN A REFERENCE POSITION

(30) Priorité: 19.12.2018 FR 1873409
(43) Date de publication de la demande: 27.10.2021
(73) Titulaire: Sidel Participations, 76930 Octeville-sur-Mer (FR)
(72) Inventeur: BOURVELLEC, Loïc, 76930 Octeville-sur-mer (FR); MORIN, Stéphane, 76930 Octeville-sur-mer (FR); FEVRE, Sébastien, 76930 Octeville-sur-mer (FR)
(74) Mandataire: Sidel Group
(86) Numéro de dépôt international: PCT/FR2019/053197
(87) Numéro de publication internationale: WO 2020/128359

(56) Documents cités:
- DE-A1-102014 118 292
- US-A1- 2003 077 349
- US-A1- 2012 089 252
- US-A1- 2015 111 162

## Description

### Domaine technique de l'invention

L'invention concerne un dispositif de convoyage de préformes en matière thermoplastique pour un four de conditionnement thermique et un procédé de commande d'un tel dispositif pour indexer angulairement chacune des préformes dans une position de référence déterminée.

L'invention concerne plus particulièrement un dispositif de convoyage de préformes en matière thermoplastique pour un four de conditionnement thermique, ledit dispositif de convoyage de préformes comportant au moins une roue principale et une roue auxiliaire dont l'une au moins est entraînée en rotation pour déplacer au moins un moyen de transport auquel sont liés en déplacement des moyens de préhension configurés pour coopérer chacun avec une préforme, lesdits moyens de préhension étant aptes à être actionnés par rapport à une préforme - ou réciproquement - entre une position inactive et une position active de préhension.

L'invention concerne également un procédé de commande d'un tel dispositif de convoyage de préformes en matière thermoplastique pour un four de conditionnement thermique. De tels dispositifs et procédés sont décrits dans les documents US2015/111162A1 et DE10 2014 118292A1.

### Arrière-plan technique

On entend en outre par « préforme » une ébauche qui est obtenue par injection de matière thermoplastique, notamment de PET (*Polytéréphtalate d'Ethylène*).

Une préforme comporte un corps creux globalement cylindrique fermé par un fond hémisphérique à une extrémité et ouvert à l'extrémité opposée par un col présentant sa forme définitive ainsi que, généralement, une collerette radiale s'étendant en saillie à la jonction du col avec le corps.

On connaît de l'état de la technique de nombreux exemples d'un tel dispositif de convoyage pour réaliser le transport de préformes en matière thermoplastique dans un four de conditionnement thermique d'une installation de fabrication de récipients, notamment mais non exclusivement de bouteilles.

Un dispositif de convoyage de préformes à l'intérieur d'un four est conçu pour transporter un flux de préformes, de l'amont vers l'aval, suivant un parcours de chauffe le long d'au moins une partie duquel des moyens de chauffage par rayonnement du corps des préformes sont agencés.

Le document WO-2017/060654 décrit et représente un exemple de réalisation d'un dispositif de convoyage de préformes pour un four de conditionnement thermique.

Le dispositif de convoyage comporte au moins un moyen de transport tel qu'une chaîne comportant une pluralité de maillons ayant chacun une platine sur laquelle sont montés lesdits moyens de préhension d'une préforme.

On connaît ainsi de nombreux exemples de réalisation de moyens de préhension d'une préforme par son col équipant un dispositif de transport, de tels moyens de préhension sont aussi appelés « tournette » (ou « *spindle »* en anglais).

A titre d'exemples de réalisation d'une telle « tournette » pour préforme, on pourra se reporter de manière non limitative aux documents WO-00/48819, WO-2014/135631, EP-1.880.825 ou encore EP-3.228.438 au nom de la Demanderesse.

Selon le document WO-2017/060654, la tournette formant les moyens de préhension comprend une douille fixée sur la platine et un mandrin pourvu d'une tête de préhension.

Le mandrin est monté mobile en translation par rapport à la douille entre une position inactive dans laquelle la tête est logée dans la douille, et une position active dans laquelle la tête fait saillie par rapport à une face inférieure de la douille, notamment pour venir s'emmancher dans le col d'une préforme.

Selon un premier exemple d'application, dite de chauffe conventionnelle, les moyens de préhension sont entraînés en rotation au moyen d'une crémaillère qui engrène un pignon que comportent des moyens de commande présentant globalement une forme de bobine et qui sont solidaires du mandrin au cours de la translation de la chaîne de transport sur au moins une partie du parcours de chauffe dans le four.

De la sorte, la préforme emmanchée sur la tête du mandrin est transportée dans le four en étant entraînée en rotation sur elle-même, de manière à en exposer pleinement le corps aux moyens de chauffage par rayonnement, tels que des lampes à rayonnement infrarouge ou des diodes laser.

Une telle chaîne de transport est habituellement montée entre deux roues, respectivement une roue principale et une roue auxiliaire, la roue principale au moins étant motrice, c'est-à-dire menante, afin d'entraîner ladite chaîne de transport en boucle fermée.

La structure d'une telle chaîne de transport est par exemple décrite dans le brevet européen EP-0.935.572 (Sidel) auquel on se reportera pour de plus amples détails.

Le déplacement en translation des moyens de préhension, plus particulièrement du mandrin, entre lesdites positions inactive et active est généralement commandé par des moyens d'actionnement comportant une fourchette d'actionnement qui est entraînée en déplacement par l'intermédiaire d'un système mécanique à came et galet.

Les moyens d'actionnement sont commandés pour réaliser une opération de chargement des préformes, encore appelée « vêtissage », sur le dispositif de convoyage puis une opération de déchargement, encore appelée « dévêtissage ».

Selon un deuxième exemple d'application, dite de chauffe préférentielle, et par comparaison avec le premier exemple d'application, les moyens de préhension (ou tournette) ne sont pas entraînés en rotation pour faire tourner la préforme sur elle-même, la préforme étant indexée angulairement autour de son axe dans une position de référence déterminée.

A titre d'exemple non limitatif, on pourra se reporter au document WO-94/23932 qui décrit un tel procédé de conditionnement (ou de traitement) thermique de préformes qui est appelé « chauffe préférentielle ».

Un tel procédé du type « chauffe préférentielle » est plus particulièrement utilisé lorsque le récipient final à obtenir n'est pas approximativement cylindrique de révolution, comme par exemple des récipients présentant une section transversale polygonale qui comporte une ou des faces approximativement planes ou encore des récipients à corps aplatis (par exemple des flacons avec un pistolet pulvérisateur).

Dans un procédé du type « chauffe préférentielle », on réalise un chauffage sélectif pour créer sur le corps de la préforme une ou des zones relativement plus chaudes qui alternent circonférentiellement avec des zones intercalaires relativement moins chaudes.

L'objectif est que les zones relativement plus chaudes se déforment plus facilement que les autres au cours du moulage du corps de la préforme par soufflage ou par étirage-soufflage pour obtenir le récipient.

Pour contrôler le chauffage sélectif sur le corps de la préforme et obtenir les zones plus ou moins chaudes, on détermine une position de référence de la préforme pour laquelle lesdites zones plus ou moins chaudes présentent angulairement autour de l'axe principal de la préforme la répartition souhaitée en fonction du récipient à fabriquer.

Dans les installations de la Demanderesse utilisées pour la fabrication de tels récipients en matière thermoplastique, les préformes sont indexées, c'est à dire orientées angulairement, dans une position de référence à l'intérieur du four de conditionnement thermique de l'installation.

Dans le cas d'un four de type tunnel présentant un parcours de chauffe en « U », l'indexation des préformes est réalisée sur un premier tronçon rectiligne, dit de pénétration, du parcours de chauffe qui comporte ensuite un deuxième tronçon curviligne, dit de stabilisation, et un troisième tronçon rectiligne de chauffage, dit de distribution.

Bien que globalement satisfaisante, une telle indexation des préformes effectuée à l'intérieur du four présente certains inconvénients.

Au nombre de ces inconvénients figure le fait que le chauffage sélectif du corps des préformes ne peut débuter qu'une fois la préforme indexée dans ladite position de référence, c'est à dire uniquement sur la partie du parcours de chauffe restant à parcourir après indexation.

C'est la raison pour laquelle, le chauffage sélectif s'effectue sur le troisième tronçon rectiligne de chauffage, dit de distribution, du corps des préformes.

Or, en fonction des récipients à fabriquer, le deuxième tronçon de distribution du parcours de chauffe du four s'avère parfois d'une longueur insuffisante pour obtenir sur le corps lesdites zones plus ou moins chaudes résultant du chauffage sélectif.

L'indexation des préformes à l'intérieur du four en combinaison avec un chauffage sélectif selon le procédé de chauffe préférentielle nécessite donc parfois l'utilisation de four présentant un parcours de chauffe plus long, c'est-à-dire un four de plus grandes dimensions.

La mise en oeuvre de l'indexation de la préforme à l'intérieur du four nécessite également d'utiliser un dispositif de transport comportant des moyens de préhension de préformes qui soient débrayables afin de pouvoir sélectivement entraîner ou non en rotation chaque préforme autour de son axe principal selon l'application.

A titre non limitatif, le document WO-00/48819 décrit un exemple de tels moyens de préhension pour convoyer des préformes à l'intérieur d'un four.

En effet, chaque préforme est successivement entraînée en rotation autour de son axe jusqu'à être indexée dans la position de référence puis on procède à un débrayage pour interrompre l'entraînement en rotation de manière à maintenir la préforme indexée dans ladite position de référence et débuter le chauffage sélectif du corps.

L'utilisation de tels moyens de support débrayables participe à limiter la cadence maximale pouvant être atteinte lors de la fabrication des récipients.

De plus, on recherche également à accroître la précision obtenue dans l'indexation des préformes afin d'améliorer la qualité des récipients fabriqués.

Le but de l'invention est notamment de proposer une nouvelle solution pour indexer angulairement les préformes dans une position de référence à l'intérieur d'un four et cela en résolvant au moins une partie des inconvénients des solutions connues, en particulier par l'obtention à des cadences élevées d'une indexation de la préforme qui soit rapide, précise et fiable.

### Résumé de l'invention

Dans ce but, l'invention propose un dispositif de convoyage de préformes en matière thermoplastique pour un four de conditionnement thermique du type décrit précédemment, caractérisé en ce que ladite roue principale du dispositif de convoyage comporte des actionneurs électriques qui sont commandés sélectivement pour entraîner au moins en rotation lesdits moyens de préhension de manière à indexer ladite préforme dans une position de référence.

Par indexer, on entend orienter la préforme angulairement autour de son axe dans ladite position de référence notamment déterminée par rapport à des moyens d'indexation que comporte la préforme, de préférence au niveau du col.

Avantageusement, les actionneurs électriques embarqués sur la roue principale du four permettent en outre d'indexer chacune des préformes dans ladite position de référence et cela en amont du premier tronçon rectiligne, dit de pénétration, grâce à quoi la totalité du parcours de chauffe à l'intérieur du four est susceptible d'être utilisé pour réaliser une chauffe préférentielle.

Avantageusement, les actionneurs électriques permettent d'obtenir une indexation angulaire de la préforme qui est rapide, précise et fiable et surtout à des cadences élevées, supérieures aux cadences obtenues jusqu'alors.

Selon d'autres caractéristiques de l'invention :
- les actionneurs électriques embarqués sur la roue principale comportent chacun des moyens de liaison qui sont configurés pour coopérer avec des moyens de commande desdits moyens de préhension de manière à entraîner lesdits moyens de préhension en rotation ;
- les moyens de liaison comportent une tige et un embout de liaison, la tige étant respectivement liée en rotation audit actionneur électrique et audit embout de liaison ;
- les moyens de commande desdits moyens de préhension comportent au moins des moyens d'entraînement en rotation des moyens de préhension ;
- les moyens de commande desdits moyens de préhension comportent au moins un organe de positionnement angulaire des moyens de préhension destiné à permettre d'indexer la préforme dans ladite position de référence ;
- les moyens de liaison comportent des moyens d'entraînement en rotation configurés pour coopérer avec ledit organe de positionnement ;
- lesdits moyens d'actionnement sont formés par un système mécanique du type à came et galet qui commande en déplacement au moins un organe d'actionnement apte à coopérer avec les moyens de commande des moyens de préhension pour entraîner lesdits moyens de préhension en translation entre la position active de préhension et la position inactive ;
- lesdits moyens d'actionnement sont formés par lesdits actionneurs électriques qui sont aptes à entraîner en translation lesdits moyens de préhension entre la position active de préhension et la position inactive ;
- les actionneurs électriques sont chacun constitués par un actionneur linéaire rotatif, tel qu'un moteur de type LinMot^{®} ;
- le moteur de type LinMot^{®} comporte un moteur linéaire et un moteur rotatif qui sont aptes à être entraînés indépendamment l'un de l'autre ;
- les actionneurs électriques comportent chacun des moyens de liaison qui sont configurés pour coopérer avec les moyens de commande des moyens de préhension de manière à entraîner lesdits moyens de préhension en rotation et en translation.

L'invention propose également un procédé de commande d'un dispositif de convoyage de préformes en matière thermoplastique pour un four de conditionnement thermique, ledit dispositif comportant au moins une roue principale et une roue auxiliaire dont l'une au moins est entraînée en rotation pour déplacer au moins un moyen de transport auquel sont liés en déplacement des moyens de préhension configurés pour coopérer chacun avec une préforme, lesdits moyens de préhension étant aptes à être actionnés par rapport à une préforme - ou réciproquement - entre une position inactive et une position active de préhension, dans lequel au moins ladite roue principale comporte des actionneurs électriques qui sont associés auxdits moyens de préhension pour entraîner sélectivement au moins en rotation lesdits moyens de préhension d'une préforme comportant des moyens d'indexation pour indexer ladite préforme dans une position de référence, ledit procédé de commande comportant au moins une étape de pré-positionnement consistant, entre un point de dévêtissage et un point de vêtissage de la roue principale, à commander sélectivement en rotation l'actionneur électrique pour pré-positionner angulairement les moyens de préhension suivant un angle d'une valeur préalablement déterminée en fonction de la position aléatoire des moyens d'indexation de ladite préforme.

Avantageusement, le procédé de commande comporte au moins une étape de détection consistant à détecter, avant le vêtissage d'une préforme, les moyens d'indexation de ladite préforme occupant une position aléatoire de manière à déterminer la valeur dudit angle à utiliser lors de l'étape de pré-positionnement.

De préférence, ladite étape de détection est réalisée avec un système de détection comportant des moyens de reconnaissance de type optique.

En variante, ladite étape de détection est réalisée avec un système de détection comportant des moyens de reconnaissance de type électromécanique.

Avantageusement, le procédé de commande comporte une étape de vêtissage consistant à commander, sélectivement au point de vêtissage, des moyens d'actionnement des moyens de préhension pour réaliser le vêtissage de la préforme occupant ladite position aléatoire.

Avantageusement, le procédé de commande comporte au moins une étape d'indexation consistant, entre un point de vêtissage et un point de désaccouplement de la roue principale, à commander l'actionneur électrique pour entraîner en rotation les moyens de préhension associés afin d'indexer la préforme dans ladite position de référence.

Avantageusement, lorsque un organe de positionnement que comportent des moyens de commande desdits moyens de préhension occupe une position dite critique après l'étape d'indexation de la préforme dans ladite position de référence, le procédé de commande comporte une étape d'intervention consistant à commander l'actionneur électrique pour entraîner en rotation les moyens de préhension afin de décaler angulairement lesdits moyens de préhension de manière à quitter ladite position critique.

Avantageusement, le procédé de commande comporte au moins une étape de correction consistant, entre un point d'accouplement et un point de dévêtissage de la roue principale, à entraîner sélectivement en rotation les moyens de préhension suivant un angle donné pour corriger une dérive de position par rapport à ladite position de référence de la préforme.

### Brève description des figures

D'autres caractéristiques et avantages de l'invention apparaitront au cours de la lecture de la description détaillée qui va suivre pour la compréhension de laquelle on se reportera aux dessins annexés dans lesquels :

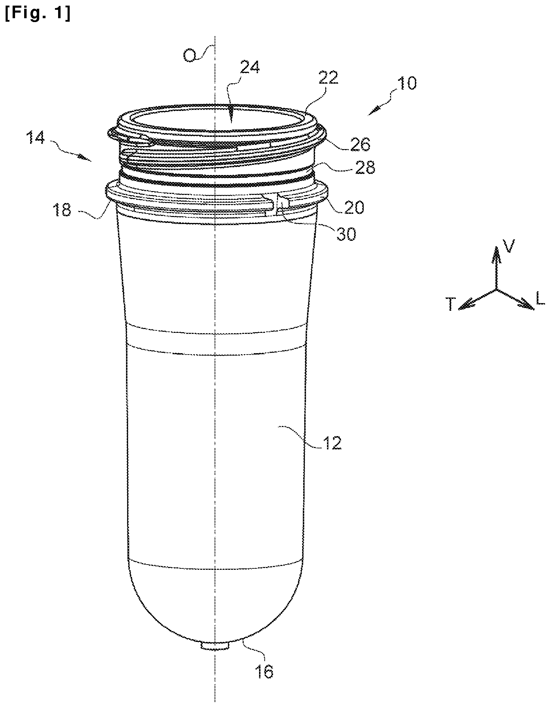

[Fig. 1] La figure 1 est une vue en perspective qui représente un exemple de réalisation d'une préforme en matière thermoplastique et qui illustre des moyens d'indexation pour l'indexation de la préforme dans une position de référence qui sont formés par une encoche agencée au niveau d'une collerette radiale ;

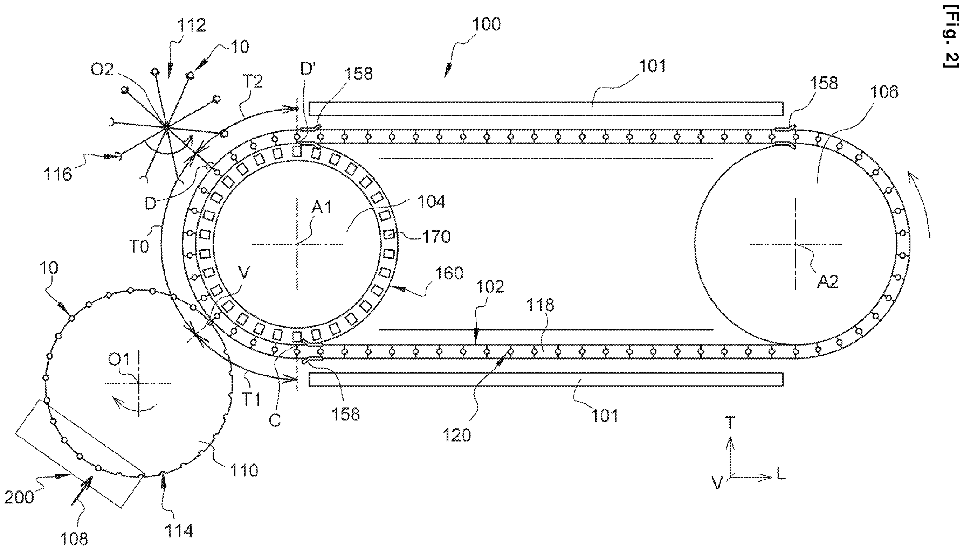

[Fig. 2] La figure 2 est une vue de dessus qui représente schématiquement une partie d'une installation de fabrication de récipients comportant un four de conditionnement thermique et qui illustre un dispositif de transport de préformes dans un tel four qui comporte une roue principale comportant des actionneurs électriques aptes à indexer les préformes dans une position de référence déterminée ;

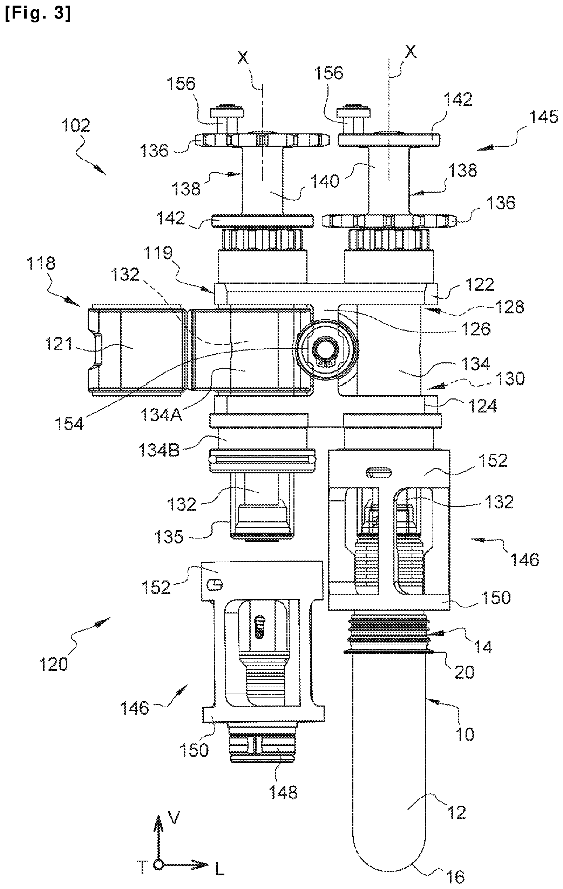

[Fig. 3] La figure 3 est une vue de côté qui représente une partie d'un moyen de transport auquel sont liés en déplacement des moyens de préhension de préformes et qui illustre un nez de préhension amovible avant montage sur la gauche et un autre nez de préhension monté qui est emmanché en position active dans l'ouverture d'un col d'une préforme ;

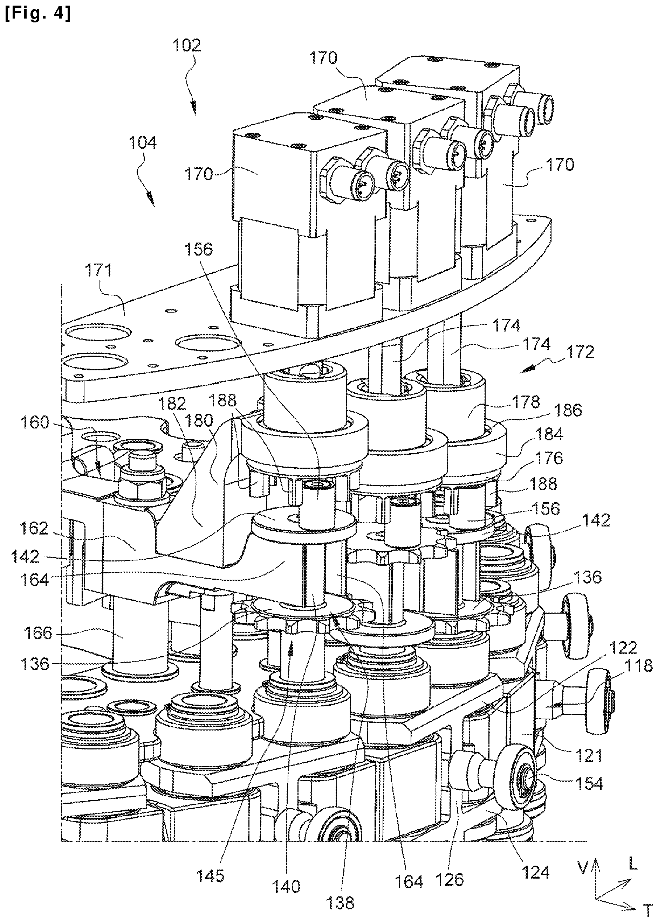

[Fig. 4] La figure 4 est une vue en perspective qui représente une partie d'un dispositif de convoyage de préformes selon un mode de réalisation de l'invention et qui en illustre la roue principale sur laquelle sont embarqués des actionneurs électriques aptes à entraîner sélectivement en rotation les moyens de préhension, par l'intermédiaire de moyens de liaison coopérant avec les moyens de commande desdits moyens de préhension ;

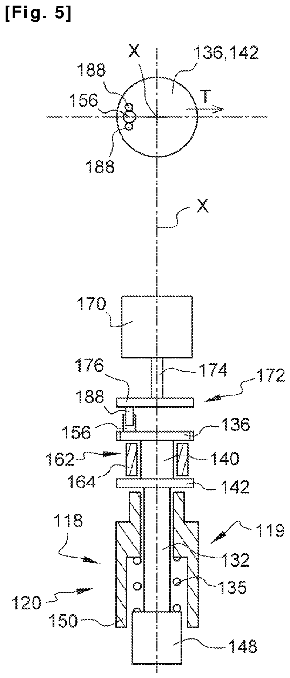

[Fig. 5] La figure 5 est une vue schématique qui représente les moyens de commande des moyens de préhension d'une préforme dans l'état (à vide) où ils se trouvent après le point de dévêtissage et qui illustre le doigt dans la position initiale dite « à la traine » correspondant à la position de référence pour une préforme ;

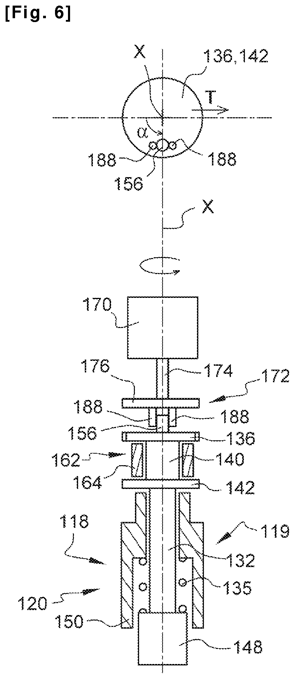

[Fig. 6] La figure 6 est une vue schématique analogue à la figure 5 qui représente les moyens de commande des moyens de préhension d'une préforme dans l'état où ils se trouvent après l'étape de pré-positionnement et qui illustre la position du doigt après son entraînement par l'actionneur électrique selon une valeur d'angle déterminée en fonction de la position aléatoire des moyens d'indexation de la préforme ;

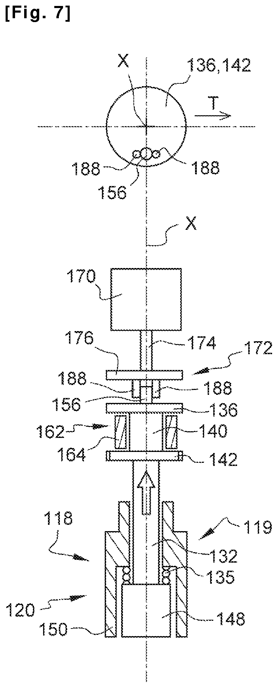

[Fig. 7] La figure 7 est une vue schématique analogue aux figures 5 et 6 qui représente les moyens de commande des moyens de préhension dans l'état où ils se trouvent avant l'opération de vêtissage d'une préforme et qui illustre l'entraînement en translation vers la position inactive des moyens de préhension par les moyens d'actionnement ;

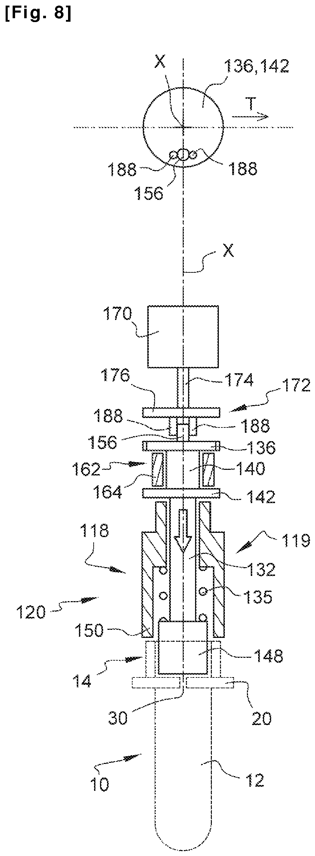

[Fig. 8] La figure 8 est une vue schématique analogue aux figures 5 à 7 qui représente les moyens de commande des moyens de préhension dans l'état où ils se trouvent au point de vêtissage de la préforme et qui illustre le doigt et les moyens d'indexation respectivement alignés radialement grâce à l'étape de pré-positionnement mise en oeuvre après l'étape de détection desdits moyens d'indexation ;

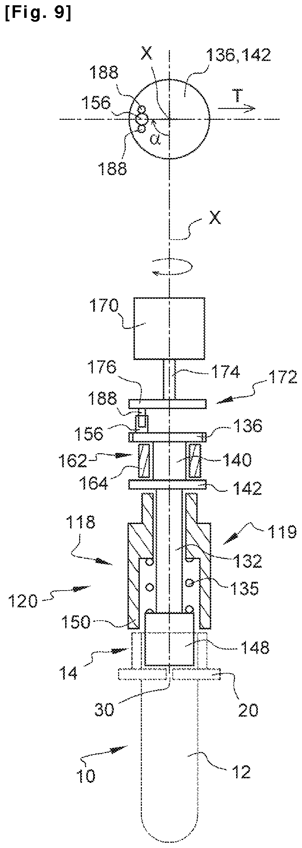

[Fig. 9] La figure 9 est une vue schématique analogue aux figures 5 à 8 qui représente les moyens de commande des moyens de préhension dans l'état où ils se trouvent après l'étape d'indexation de la préforme et qui illustre la préforme en position de référence ;

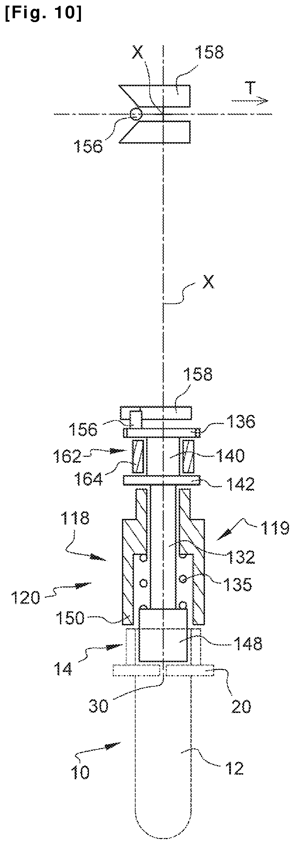

[Fig. 10] La figure 10 est une vue schématique analogue aux figures 5 à 9 qui représente les moyens de commande des moyens de préhension dans l'état où ils se trouvent après le point de désaccouplement et qui illustre des rails formant des moyens de guidage aptes à coopérer avec le doigt pour garantie que la préforme occupe ladite position de référence avant son introduction dans le premier tronçon de chauffage de pénétration du parcours de chauffe à l'intérieur du four.

### Description détaillée de l'invention

Dans la suite de la description, on adoptera à titre non limitatif les orientations longitudinale, verticale et transversale en référence au trièdre (L, V, T) représenté sur les figures.

Par convention, les orientations longitudinale et transversale sont déterminées de manière fixe par rapport à l'axe d'une préforme ou l'axe de rotation d'une roue.

On utilisera également à titre non limitatif les termes « avant » et « arrière » en référence à l'orientation longitudinale, ainsi que « supérieur » et « inférieur » ou « haut » et « bas » en référence à l'orientation verticale et enfin « gauche » et « droite » en référence à l'orientation transversale.

Les termes « intérieur » ou « extérieur » et « interne » ou « externe » sont respectivement utilisés par rapport à une préforme ou une roue d'une manière générale notamment pour désigner un élément situé soit dedans, soit en dehors de la préforme.

Les termes « amont » et « aval » sont respectivement utilisés en référence au flux de préformes qui sont transportées de l'amont vers l'aval.

On a représenté sur la figure 1 un exemple particulier de réalisation d'une préforme 10 en matière thermoplastique.

Avantageusement, la préforme 10 est fabriquée par moulage par injection de matière thermoplastique, notamment en PET.

De manière connue, une telle préforme 10 en matière thermoplastique est destinée à être transformée ultérieurement en un récipient, tel qu'une bouteille, un flacon, un pot. Toutefois, le terme « récipient » désigne ici de manière non limitative un tel récipient final comme un récipient dit intermédiaire.

La fabrication de récipients est par exemple réalisée dans une installation de fabrication (non représentée) dans laquelle la préforme 10 en matière thermoplastique est chauffée dans un four 100 de conditionnement thermique.

Un exemple de four 100 de conditionnement thermique formant l'une des unités d'une telle installation de fabrication est illustré à la figure 2 qui sera décrite ultérieurement.

Le conditionnement thermique de la préforme 10 dans le four 100 est réalisé préalablement à sa transformation en récipient par soufflage (ou par étirage-soufflage) à l'intérieur du moule d'une unité de moulage et au moyen d'au moins un fluide sous pression, généralement constitué par de l'air.

La préforme 10 présente un axe O principal qui s'étend ici selon la direction verticale du trièdre (L, V, T) représenté sur la figure 1.

La préforme 10 comporte un corps 12 qui, s'étendant verticalement selon l'axe O, se raccorde à une extrémité à un col 14 et est fermé à l'extrémité opposée par un fond 16.

Le col 14 comporte une surface 18 d'appui par l'intermédiaire de laquelle la préforme 10 est susceptible d'être supportée.

Avantageusement, le col 14 de la préforme 10 comporte au moins une collerette 20 qui s'étend radialement dans un plan (L, T) du trièdre. La collerette 20 est située dans une zone de jonction du col 14 avec le corps 12 et s'étend radialement en saillie vers l'extérieur, notamment par rapport au corps 12.

De préférence, la surface 18 d'appui de la préforme 10 est formée par une face inférieure de ladite collerette 20 radiale.

Le col 14 comporte un bord 22 supérieur (ou buvant) qui délimite circonférentiellement une ouverture 24 d'accès à l'intérieur du corps 12 de la préforme 10. Le corps 12 présente ici une forme globalement cylindrique.

Dans l'exemple de réalisation, le col 14 comporte à l'extérieur un filetage 26 destiné à permettre la fermeture ultérieure du récipient, par exemple par un bouchon à vis ou encore une bague de fixation par vissage d'un pistolet pulvérisateur.

Le col 14 comporte encore une gorge 28 annulaire qui, adjacente à la collerette 20, est par exemple destinée à recevoir une bague d'inviolabilité temporairement solidaire d'un bouchon à vis jusqu'à ouverture du récipient.

En variante non représentée, la surface 18 d'appui peut être constituée par une partie du filetage 26.

La description de la préforme 10 qui vient d'être faite vaut également pour un récipient obtenu à partir d'une telle préforme dès lors notamment que le col 14 de l'une et l'autre est identique, ledit col 14 présentant après la fabrication sa forme définitive.

En effet, on rappelle que le col 14 ayant sa forme définitive, seul le corps 12 de la préforme 10 est chauffé dans le four 100 de conditionnement thermique d'une installation de fabrication de récipients.

Pour certaines applications, il est nécessaire de pouvoir indexer ou orienter angulairement la préforme 10 dans une position géométrique particulière, dite position de référence.

Tel sera par exemple le cas pour une préforme 10 lorsque le chauffage du corps 12 de la préforme 10 dans le four 100 de conditionnement thermique n'est pas uniforme afin de permettre l'obtention de récipient présentant une forme particulière, en particulier non cylindrique.

Tel sera aussi le cas pour un récipient, comme par exemple un flacon sur le col duquel est fixé par vissage un pistolet de pulvérisation qui doit occuper une position déterminée, généralement alignée par rapport au corps aplati du flacon.

C'est la raison pour laquelle, la préforme 10 comporte des moyens 30 d'indexation destinés à permettre de positionner angulairement, par rapport à son axe O, la préforme 10 dans ladite position de référence.

Avantageusement, le col 14 présentant sa forme définitive, lesdits moyens 30 d'indexation permettent de positionner angulairement une préforme 10 comme ultérieurement le récipient (bouteille, flacon, etc.) obtenu à partir d'une telle préforme.

De préférence, lesdits moyens 30 d'indexation de la préforme 10 sont agencés au niveau du col 14.

Les moyens 30 d'indexation comportent au moins un élément d'indexation destiné à permettre d'indexer la préforme 10 dans ladite position de référence.

Tel qu'illustré sur la figure 1, les moyens 30 d'indexation sont ici de type femelle et par exemple constitués par au moins une encoche.

De préférence, l'encoche est réalisée dans la collerette 20 radiale, en variante dans le filetage 26.

En variante non représentée, les moyens 30 d'indexation sont de type mâle, tel qu'un ergot formant ledit au moins un élément d'indexation, et s'étendent en saillie par exemple au-dessus de la collerette 20 radiale.

De préférence, les moyens 30 d'indexation de type mâle sont réalisés venus de matière, en une seule pièce, avec la collerette 20 de la préforme 10.

De tels moyens 30 d'indexation mâle ou femelle sont donnés à titre d'exemples non limitatifs. En effet, on pourrait par exemple également utiliser le filetage présent sur le col pour réaliser une indexation de la préforme 10.

Plus généralement, les moyens 30 d'indexation de la préforme 10 dans une position de référence vont en outre dépendre des moyens de détection, par exemple optique ou électromécanique, qui sont mis en oeuvre pour les détecter afin de pouvoir ensuite indexer ladite préforme 10.

On décrira maintenant en référence à la figure 2 tout particulièrement, le four 100 de conditionnement thermique pour des préformes 10 en matière thermoplastique telles que celle illustrée sur la figure 1.

Le four 100 comporte des moyens 101 de chauffage par rayonnement destinés à chauffer le corps 12 des préformes 10 convoyées à l'intérieur du four.

Dans l'exemple de la figure 2, le four 100 est de type « tunnel » dans lequel les préformes 10 suivent de l'amont vers l'aval un parcours de chauffe en « U ».

Le parcours comporte successivement un premier tronçon rectiligne de chauffage, dit de pénétration, un deuxième tronçon curviligne (sans chauffage), dit de stabilisation, et un troisième tronçon rectiligne de chauffage, dit de distribution.

Les moyens 101 de chauffage sont respectivement agencés sur les deux tronçons de chauffage du parcours.

La préforme 10 est préférentiellement transportée à travers l'installation et plus particulièrement convoyée dans le four 100 dans une position dite « col en haut » avec une orientation verticale correspondant à celle représentée sur la figure 1.

En variante non représentée, la préforme 10 est convoyée dans le four 100 dans une position inverse dite « col en bas » qui comporte alors des moyens de retournement des préformes agencés en entrée et en sortie du parcours de chauffe.

Le four 100 comporte un dispositif 102 de convoyage de préformes 10 comportant au moins une roue 104 principale et une roue 106 auxiliaire dont l'une au moins est entraînée en rotation.

La roue 104 principale et la roue 106 auxiliaire présentent respectivement un axe A1 de rotation et un axe A2 de rotation.

De préférence, la roue 104 principale est entraînée en rotation par un moteur (non représenté) et la roue 106 auxiliaire est liée en rotation à ladite roue 104 principale.

Le four 100 est alimenté en préformes 10 par un dispositif 108 d'alimentation qui, ici représenté schématiquement par une flèche sur la figure 2, comporte au moins une première roue 110 de transfert, dite d'entrée, présentant un axe O1 de rotation.

Une deuxième roue 112 de transfert, dite de sortie, présentant un axe 02 de rotation est agencée pour transporter les préformes 10 en aval du four 100 de conditionnement thermique.

Les préformes 10 chaudes sont notamment transportées par la deuxième roue 112 de transfert en aval jusqu'à une unité de moulage (non représentée), encore appelée « souffleuse », dans laquelle chaque préforme 10 est transformée en récipient dans un moule par soufflage ou par étirage-soufflage.

La première roue 110 de transfert est munie d'une pluralité d'encoches 114 qui sont réparties circonférentiellement de manière régulière autour de l'axe O1 de rotation.

La deuxième roue 112 de transfert des préformes 10 jusqu'à l'unité de moulage comporte des pinces 116, ici montées à l'extrémité libre d'une pluralité de bras, l'ouverture et/ou la fermeture desdites pinces 116 étant par exemple commandée(s) mécaniquement par un système à came et à galet.

Entre lesdites roues 110, 112 de transfert, les préformes 10 sont transportées à l'intérieur du four 100 par le dispositif 102 de convoyage.

Le dispositif 102 de convoyage de préformes 10 comporte au moins un moyen 118 de transport dont un exemple de réalisation est en partie illustré à la figure 3.

De préférence, le moyen 118 de transport comporte au moins une chaîne (ou une courroie) sur laquelle sont montés des moyens 120 de préhension.

Le dispositif 102 de convoyage comporte une pluralité de moyens 120 de préhension qui sont ainsi liés en déplacement au moyen 118 de transport formé par la chaîne qui est destinée à être entraînée en boucle fermée par la roue 104 principale et par la roue 106 auxiliaire.

La structure d'un tel moyen 118 de transport comme des moyens 120 de préhension sont bien connus, par exemple des documents WO-2017/060654 et EP-0.935.572 précités.

Tel qu'illustré sur la figure 3, le moyen 118 de transport comporte un support 119 mobile destiné à être articulé avec d'autres supports mobiles (non représentés) identiques par l'intermédiaire de maillons 121 d'articulation de manière à former une chaîne fermée de transport.

Le support 119 mobile présente ici une platine 122 horizontale supérieure et une platine 124 inférieure horizontale qui sont reliées par une âme 126 centrale verticale transversale.

Les platines 122, 124 sont chacune ajourées de deux orifices 128, 130, chaque orifice 128 de la platine 122 supérieure étant en coïncidence verticale avec un orifice 130 de la platine 124 inférieure.

Les moyens 120 de préhension ou « tournette » comportent un arbre 132 monté rotatif dans le support 119 mobile autour d'un axe X s'étendant verticalement selon le trièdre (L, V, T) représenté sur la figure 3.

Chaque arbre 132 est reçu à rotation dans les orifices 128, 130 en coïncidence associés du support 119.

Les deux arbres 132 sont agencés de manière similaire sur le support 119. A cet égard, on décrira par la suite l'agencement d'un seul arbre 132, cet agencement étant applicable à l'autre arbre 132.

De manière connue, une chaîne souple fermée est réalisée par une alternance de supports 119 et de maillons 121 d'articulation, chaque support 119 étant monté pivotant autour de l'axe X de l'arbre 132 amont associé avec le maillon 121 d'articulation précédent.

Un manchon 134 est interposé radialement entre chaque arbre 132 et le support 119. Chaque manchon 134 est monté fixe par rapport au support 119, tandis que l'arbre 132 est monté rotatif et coulissant axialement dans le manchon 134.

Le manchon 134 présente un tronçon 134A supérieur tubulaire de diamètre sensiblement constant qui traverse les deux orifices 128, 130 et un tronçon 134B inférieur formant une jupe évasée vers le bas.

Le tronçon 134B inférieur s'étend au-dessous de la platine 124 inférieure du support 119. Un espace radial fonctionnel permettant la rotation de l'arbre 132 dans le manchon 134 est prévu entre une paroi interne du tronçon 134A tubulaire et une face externe cylindrique de l'arbre 132.

A une extrémité supérieure, l'arbre 132 est pourvu d'un pignon 136, solidaire en rotation de celui-ci.

Le pignon 136 est intégré à une pièce 138 en forme de bobine qui comprend un fût 140 à une extrémité axiale duquel s'étend le pignon 136 et, à l'opposé de celui-ci, un flasque 142 de diamètre inférieur à celui du pignon 136.

Selon les applications, le pignon 136 est destiné à être engrené par une crémaillère (non représentée) qui s'étend le long d'une partie du parcours de chauffe, de façon à entraîner l'arbre 132 en rotation.

La pièce 138 en forme de bobine est aussi montée solidaire en coulissement axial avec l'arbre 132.

Chaque arbre 132 est guidé en rotation par rapport au support 119 par au moins deux paliers à roulements, respectivement supérieur et inférieur, qui ne sont pas visibles sur la figure 3 et par exemple formés par des roulements à billes.

L'arbre 132 est monté coulissant axialement pour permettre l'actionnement des moyens 120 de préhension entre une position active de préhension illustrée sur la droite de la figure 3, et une position inactive (non représentée) dans laquelle l'arbre 132 est entraîné en coulissement vers le haut par rapport à ladite position active.

De préférence, l'arbre 132 est rappelé élastiquement vers la position active de préhension desdits moyens 120 de préhension par un organe de rappel, ici un ressort 135 hélicoïdal.

Les moyens 120 de préhension d'une préforme 10 comportent ainsi des moyens 145 de commande qui, comprenant en outre le pignon 136, la bobine 138 comportant le fût 140 et le flasque 142, sont solidaires de l'arbre 132.

Les moyens 145 de commande des moyens 120 de préhension sont configurés pour permettre d'en commander le déplacement tant en rotation qu'en translation entre lesdites positions inactive et active de préhension.

On décrira ci-après un exemple de réalisation des moyens 120 de préhension d'une préforme 10 en matière thermoplastique.

De préférence, l'arbre 132 est destiné à porter à son extrémité inférieure un nez 146 amovible, dit "nez de tournette", qui comporte à son extrémité inférieure un organe 148 de préhension de la préforme 10 par son col 14.

L'organe 148 de préhension est ici un mandrin qui est monté coaxial avec l'arbre 132 et pourvu de moyens élastiques (non représentés), tel qu'un joint torique, avantageusement réalisé dans un matériau élastique, et dont le diamètre externe est égal ou légèrement supérieur au diamètre interne du col 14.

L'organe 148 de préhension formé par le mandrin est configuré pour assurer la sustentation de la préforme 10 par frottement contre la paroi interne du col 14 lorsque, en position active de préhension, ledit organe 148 de préhension est inséré dans le col 14 lors de l'opération dite de vêtissage.

Avantageusement, l'organe 148 de préhension est destiné à être monté fixe sur l'arbre 132 par des moyens de fixation rapides, préférentiellement par emboîtement élastique de formes complémentaires tels que des moyens de fixation à baïonnette ou des moyens de fixation à billes.

Le nez 146 comporte en outre un plateau 150 d'extraction qui est monté coulissant axialement par rapport à l'organe 148 de préhension. Le plateau 150 d'extraction présente un passage central qui permet de faire passer l'organe 148 de préhension au-dessous du plateau 150 dans la position active des moyens 120 de préhension, et au-dessus du plateau 150 dans la position inactive.

Le plateau 150 est fixé au tronçon 134B inférieur du manchon 34 par emboîtement axial avec un anneau 152 supérieur qui est fixé au-dessus du plateau 150.

Le plateau 150 est destiné à prendre appui sur un bord 22 supérieur du col 14 de la préforme 10 lorsque l'organe 148 de préhension est déplacé vers le haut afin de permettre son extraction du col 14 lors de l'opération dite de dévêtissage.

Avantageusement, le support 119 est commandé entre deux orientations de roulis par un suiveur 154 de came qui est destiné à coopérer par contact avec un tronçon de came (non représenté) hélicoïdal agencé en amont et en aval des tronçons de chauffage du four 100 suivi par les supports 119. Le suiveur 154 de came est ici formé par un galet qui est monté rotatif autour d'un axe transversal sur l'âme 126 du support 119.

Lorsqu'un support 119 du moyen 118 de transport se déplace à l'intérieur du four le long de portion du parcours sur lesquelles le pignon 136 n'est pas engrené avec une crémaillère, l'arbre 132 rotatif est libre de tourner autour de son axe X.

Dans le cas d'une application de type chauffe préférentielle, il est nécessaire de maîtriser parfaitement l'orientation angulaire des préformes 10 autour de leur axe O pour conserver l'indexation dans une position de référence, depuis leur entrée dans le four 100 jusqu'à leur transformation en récipient.

En outre, pour garantir que l'arbre 132 ne reste pas bloqué dans une position angulaire non indexée, il est connu de prévoir des moyens mécaniques de contrôle aptes à assurer une remise en rotation de l'arbre 132 par rapport au support 119 intervenant lorsque le pignon 136 n'est pas engagé avec une crémaillère.

Les moyens mécaniques de contrôle comportent un doigt 156 vertical (aussi appelé parfois galet) qui s'étend verticalement en saillie vers le haut par rapport à celui du flasque 142 ou du pignon 136 qui est agencé à l'extrémité supérieure de la pièce 138 en forme de bobine.

Le doigt 156 est excentré par rapport à l'axe X de l'arbre 132, plus précisément le doigt 156 est excentré longitudinalement vers l'arrière lorsque lesdits moyens 120 de préhension lié à l'arbre 132 occupe ladite position de référence correspondant à une position dans laquelle le doigt 156 (ou galet) est dit « à la traîne ».

Chaque doigt 156 est susceptible de coopérer avec des moyens 158 de guidage qui sont avantageusement configurés pour le positionner automatiquement ledit doigt 156 dans la position dite « à la traine » correspondant à la position de référence.

Tels que représentés schématiquement sur la figure 2, les moyens 158 de guidage sont par exemple constitués par une paire de rails présentant une portion initiale qui est ouverte en « V », c'est-à-dire en forme d'entonnoir, puis suivant le sens de déplacement des supports 119 une portion finale vers laquelle les rails convergent.

Les rails 158 sont agencés de part et d'autre pour délimiter entre eux un passage calibré pour le doigt 156 qui, en cas de décalage angulaire par rapport à ladite position de référence, entre alors en contact avec l'un des rails ce qui provoque automatiquement une mise en rotation de l'arbre 132, grâce à quoi les moyens 120 de préhension sont orientés angulairement pour occuper ladite position de référence.

Autrement dit, l'extrémité rapprochée des deux rails 158 est suffisamment écartée pour laisser passer le doigt 156 sans le heurter si les moyens 120 de préhension occupent ladite position de référence.

A titre d'exemples non limitatifs, on pourra se reporter aux documents FR-3.063.982 ou FR-3.062.643 qui décrivent et représentent de tels moyens mécaniques.

Avantageusement, de tels moyens 158 de guidage sont agencés le long du parcours de chauffe du four 100 directement en amont des points dans lesquels le pignon 136 commence à être engrené avec une crémaillère, soit au moins avant le début des deux tronçons de chauffage, respectivement de pénétration et de distribution.

Avantageusement, des moyens 158 de guidage sont également agencés à la fin du tronçon de distribution, notamment pour corriger une éventuelle dérive de position.

On décrira ci-après en référence à la figure 4, un mode de réalisation selon l'invention d'un dispositif 102 de convoyage de préformes 10 en matière thermoplastique pour un four 100 de conditionnement thermique.

Tel que décrit précédemment en références au figures 2 et 3, ledit dispositif 102 de convoyage de préformes 10 comporte au moins une roue 104 principale qui est entraînée en rotation pour déplacer au moins ledit moyen 118 de transport formé par une chaîne à laquelle sont liés en déplacement lesdits moyens 120 de préhension qui sont configurés pour coopérer chacun avec une préforme 10 telle que celle représentée à la figure 1.

De préférence, les moyens 120 de préhension sont aptes à être actionnés par rapport à une préforme 10 entre une position inactive et une position active de préhension.

En variante non représentée, la préforme 10 est entraînée en déplacement relativement aux moyens 120 de préhension entre une position inactive et une position active de préhension.

De préférence, les moyens 120 de préhension sont déplacés en translation entre lesdites positions inactive et active de préhension par des moyens 160 d'actionnement de type mécanique pour réaliser sélectivement les opérations de vêtissage et de dévêtissage des préformes 10 par rapport au dispositif 102 de convoyage.

Sur la figure 2 illustrant schématiquement un four 100 comportant ledit dispositif 102 de convoyage, on a représenté par des points V, C, D' et D les principales étapes du fonctionnement des moyens 120 de préhension.

La roue 104 principale du dispositif 102 de convoyage comporte un point V de vêtissage et un point D de dévêtissage ainsi qu'un point C de désaccouplement entre les moyens 120 de préhension et ici des moyens 160 d'actionnement de type mécanique et, réciproquement, un point D' d'accouplement.

On connaît de nombreux exemples de réalisation de tels moyens 160 d'actionnement qui ne seront par conséquent pas décrits de manière détaillée ci-après.

La figure 4 correspond plus particulièrement à l'opération de vêtissage d'une préforme 10 réalisée au point V de vêtissage. Tel qu'illustré par la figure 4, les moyens 160 d'actionnement comportent une fourchette 162 qui est configurée pour coopérer avec la bobine 138 desdits moyens 145 de commande.

Plus précisément, la fourchette 162 comporte deux bras 164 qui s'étendent radialement vers l'extérieur de la roue 104 et délimitent entre eux un logement dans lequel est reçu le fût 140 de la bobine 138 s'étendant entre le pignon 136 et le flasque 142.

La fourchette 162 est solidaire d'une extrémité supérieure d'une colonne 166 qui est montée mobile en translation pour actionner les moyens 120 de préhension entre la position inactive et la position active de préhension.

Pour ce faire, la colonne 166 comporte à une extrémité inférieure au moins un galet qui est destiné à coopérer avec une came complémentaire lorsque la roue 104 principale est entraînée en rotation.

Les moyens 160 d'actionnement desdits moyens 120 de préhension sont commandés en déplacement par l'intermédiaire d'un système mécanique (non représenté) à came et galet.

De préférence, la colonne 166 est montée mobile en translation à l'encontre d'un organe de rappel (non représenté), tel qu'un ressort.

Selon l'invention, ladite roue 104 principale du dispositif 102 de convoyage comporte des actionneurs 170 électriques qui sont aptes à être commandés sélectivement pour entraîner au moins en rotation lesdits moyens 120 de préhension de manière à indexer ladite préforme 10 dans une position de référence.

Sur la figure 4, on n'a représenté qu'une partie de ladite roue 104 embarquant les actionneurs 170 électriques destinés à indexer les moyens 120 de préhension.

Dans le mode de réalisation, les actionneurs 170 électriques comportent au moins un moteur électrique.

En variante, les actionneurs 170 électriques sont des moteurs synchrones sans balais, encore appelés « *moteur brushless ».*

Par simplification, on a représenté sur la figure 4 seulement trois actionneurs 170 électriques montés sur une platine 171 solidaire en rotation de la roue 104.

On comprendra cependant que des actionneurs 170 électriques sont répartis de manière régulière sur toute la circonférence de la roue 104 principale, un actionneur 170 électrique étant associé à chacun des moyens 120 de préhension d'une préforme 10.

Les actionneurs 170 électriques sont solidaires de la roue 104 principale. Ainsi, les actionneurs 170 électriques sont entraînés en rotation avec ladite roue 104 autour de l'axe A1.

Les actionneurs 170 électriques vont ainsi venir chacun, à partir du point D' d'accouplement et jusqu'au point C de désaccouplement, coopérer avec les moyens 145 de commande d'un des moyens 120 de commande.

Pour réaliser l'indexation, les actionneurs 170 électriques comportent chacun des moyens 172 de liaison qui sont configurés pour coopérer avec des moyens 145 de commande desdits moyens 120 de préhension de manière à entraîner sélectivement lesdits moyens 120 de préhension en rotation.

Dans le mode de réalisation, les moyens 172 de liaison comportent en outre une tige 174 et un embout 176 de liaison.

La tige 174 est respectivement liée en rotation audit actionneur 170 électrique à l'une de ses extrémités et audit embout 176 de liaison à l'autre de ses extrémités.

De préférence, un connecteur 178 est monté entre la tige 174 et l'embout 176 de liaison, ledit connecteur 178 étant solidaire en rotation de l'embout 176 de liaison qui est ici réalisé en deux pièces.

L'embout 176 de liaison et le connecteur 178 sont par exemple fixés ensemble par des moyens de fixation tels que des vis.

L'extrémité inférieure de la tige 174 est configurée pour assurer par coopération de formes l'entraînement en rotation de l'embout 176 de liaison.

L'extrémité inférieure de la tige 174 comporte un pourtour non cylindrique, par exemple au moins deux faces planes opposées destinées à coopérer avec une empreinte complémentaire que comporte le connecteur 178 solidaire de l'embout 176 de liaison.

Les moyens 172 de liaison sont montés par l'intermédiaire d'un support 180 comportant un corps 182 et une tête 184.

Avantageusement, le corps 182 est ici monté solidaire de la fourchette 162 des moyens 160 d'actionnement desdits moyens 120 de préhension et la tête 184 s'étend à l'extrémité opposée dudit corps 182, radialement vers l'extérieur à l'aplomb desdits moyens 120 de préhension.

Le connecteur 178 et l'embout 176 de liaison forment un ensemble qui est monté libre en rotation par rapport à la tête 184 du support 180 par l'intermédiaire d'au moins un moyen 186 de roulement.

Pour assurer l'entraînement en rotation des moyens 120 de préhension par l'intermédiaire des moyens 145 de commande, l'embout 176 de liaison est configuré pour coopérer avec organe de positionnement angulaire des moyens 120 de préhension qui est destiné à permettre d'indexer la préforme 10 dans ladite position de référence.

Tel que décrit précédemment en référence à la figure 2, les moyens 145 de commande desdits moyens 120 de préhension comportent un doigt 156 qui est de manière alternée solidaire soit du pignon 136, soit du flasque 142.

Avantageusement, le doigt 156 constitue ledit organe de positionnement angulaire des moyens 120 de préhension qui est utilisé pour indexer la préforme 10 dans la position de référence.

L'embout 176 de liaison est ainsi configuré pour coopérer avec ledit doigt 156 excentré de manière à permettre un entraînement en rotation des moyens 120 de préhension par l'intermédiaire des moyens 145 de commande.

Tel qu'illustré sur la figure 4, l'embout 176 de liaison comporte des moyens 188 d'entraînement en rotation destinés à coopérer ici avec ledit doigt 156 formant l'organe de positionnement.

De préférence, lesdits moyens 188 d'entraînement en rotation portés par l'embout 176 de liaison comportent une pluralité de pattes 188, par exemple ici cinq ou six pattes, qui s'étendent verticalement en dessous de l'embout 176 en direction du doigt 156.

Les pattes 188 sont disposés en périphérie de l'embout 176 et présentent un espace entre deux pattes 188 adjacentes qui est déterminé pour que lesdites pattes 188 coopèrent avec ledit doigt 156 de manière à assurer la transmission du mouvement de rotation de l'actionneur 170 électrique aux moyens 145 de commande des moyens 120 de préhension.

Le doigt 156 ne constitue toutefois qu'un exemple d'organe de positionnement angulaire des moyens 120 de préhension.

En variante non représentée, l'organe de positionnement angulaire des moyens 120 de préhension est constitué par le pignon 136 ou une autre partie des moyens 145 de commande.

Selon cette variante, l'embout 176 de liaison est configuré pour coopérer avec le pignon 136, par exemple pour venir coopérer avec sa denture afin d'obtenir une liaison en rotation sans jeu et la transmission de tout mouvement de rotation de l'actionneur 170 électrique.

Dans le mode de réalisation qui vient d'être décrit, les moyens 162 de liaison intervenant entre l'actionneur 170 électrique et les moyens 145 de commande sont mécaniques.

En effet, la transmission d'un mouvement de rotation de l'actionneur 170 électrique s'opère par l'intermédiaire de la tige 174 qui entraîne en rotation l'embout 176 de liaison dont une partie des pattes 188 est en prise avec ledit doigt 156.

En variante non représentée, les moyens 162 de liaison intervenant entre l'actionneur 170 électrique et les moyens 145 de commande sont par exemple magnétiques.

Dans le mode de réalisation illustré à la figure 4, les moyens 120 de préhension sont entraînés en translation entre lesdites positions inactive et active de préhension par l'intermédiaire des moyens 160 d'actionnement mécanique conventionnels décrits précédemment.

Ces moyens 160 d'actionnement comportent en outre une fourchette 162 qui est actionnée en translation via la colonne 166 par un système mécanique à came et galet.

En variante non représentée, ces moyens 160 d'actionnement de type mécanique sont supprimés et avantageusement remplacés par les actionneurs 170 électriques.

Selon cette variante, les actionneurs 170 électriques sont aptes à entraîner en translation lesdits moyens 120 de préhension entre la position active de préhension et la position inactive.

Avantageusement, l'actionneur 170 électrique est alors un actionneur linéaire rotatif, tel qu'un moteur de type LinMot^{®}.

Un tel actionneur électrique comporte respectivement un moteur linéaire et un moteur rotatif qui sont avantageusement aptes à être entraînés indépendamment l'un de l'autre.

Dans cette variante, le moteur linéaire de l'actionneur assure l'actionnement en translation des moyens 145 de commande lors des opérations de vêtissage et de dévêtissage d'une préforme 10 par les moyens 120 de préhension.

Dans cette variante, le moteur rotatif de l'actionneur assure l'entraînement en rotation des moyens 120 de préhension pour indexer la préforme 10 dans ladite position de référence, notamment l'entraîner sélectivement en rotation (mécaniquement ou magnétiquement) par l'intermédiaire desdits moyens 145 de commande.

Dans une telle variante, les moyens 172 de liaison associés à chaque actionneur 170 électrique sont configurés pour entraîner en rotation et en translation lesdits moyens 120 de préhension d'une préforme 10, notamment en coopérant avec les moyens 145 de commande décrits précédemment.

Les moyens 172 de liaison selon cette variante comportent par exemple un embout qui est solidaire de l'extrémité libre d'une tige reliée à l'actionneur 170 électrique.

D'une part, l'embout comporte au moins une paire de bras d'actionnement configurés pour venir coopérer sélectivement avec le fût 140 d'une bobine 138 que comportent des moyens 145 de commande de moyens 120 de préhension afin d'entraîner en translation lesdits moyens 120 de préhension entre la position inactive et la position active de préhension d'une préforme 10.

D'autre part, l'embout comporte un bras d'entraînement configuré pour coopérer avec une partie des moyens 145 de commande de moyens 120 de préhension, par exemple la denture du pignon 136, afin d'entraîner en rotation lesdits moyens 120 de préhension pour les indexer dans la position de référence déterminée par les moyens 30 d'indexation de la préforme 10.

On décrira maintenant le fonctionnement d'un dispositif 102 de convoyage de préformes 10 selon le mode de réalisation de l'invention illustré à la figure 4.

En effet, l'invention concerne également un procédé de commande d'un tel dispositif 102 de convoyage de préformes 10 en matière thermoplastique pour un four 100 de conditionnement thermique.

Tel qu'illustré à la figure 2 et décrit précédemment, le dispositif 102 de convoyage de préformes 10 comporte au moins une roue 104 principale et une roue 106 auxiliaire dont l'une au moins est entraînée en rotation pour déplacer au moins un moyen 118 de transport, tel qu'une chaîne, auquel sont liés en déplacement des moyens 120 de préhension (ou « tournette ») configurés pour coopérer chacun avec une préforme 10 telle que celle illustrée à la figure 1.

Les moyens 120 de préhension sont aptes à être actionnés par rapport à une préforme 10 - ou réciproquement - entre une position inactive et une position active de préhension, notamment par des moyens 160 d'actionnement comportant une fourchette 162 actionnée par un système à came et galet.

Selon l'invention, au moins la roue 104 principale du dispositif 102 de convoyage comporte des actionneurs 170 électriques qui sont associés auxdits moyens 120 de préhension pour entraîner sélectivement au moins en rotation lesdits moyens 120 de préhension d'une préforme 10 comportant des moyens 30 d'indexation de manière à indexer ladite préforme 10 dans une position de référence.

On a représenté schématiquement sur les figures 5 à 10 au moins les moyens 120 de préhension en vue de côté afin d'illustrer les positions successivement occupées en fonctionnement auxquelles on a associé des coupes en vue de dessus représentant en outre la coopération des moyens 172 de liaison et des moyens 145 de commande afin d'illustrer la mise en oeuvre du procédé de commande pour indexer chaque préforme 10 dans la position de référence.

Le procédé de commande du dispositif 102 de convoyage comporte au moins une étape de pré-positionnement des moyens 120 de préhension d'une préforme 10.

L'étape de pré-positionnement est réalisée entre le point D de dévêtissage et le point V de vêtissage de la roue 104 principale et est illustrée par les figures 5 et 6.

L'étape de pré-positionnement consiste à commander sélectivement en rotation l'actionneur 170 électrique pour pré-positionner angulairement les moyens 120 de préhension suivant un angle α (alpha) d'une valeur préalablement déterminée en fonction de la position aléatoire des moyens 30 d'indexation de ladite préforme 10.

L'étape de pré-positionnement est réalisée sur un tronçon T0 de la roue 104 principale qui, illustré sur la figure 2, s'étend entre le point D de dévêtissage et le point V de vêtissage.

Au point D de dévêtissage, les préformes 10 conditionnées thermiquement sont transférées vers l'aval, du dispositif 102 de convoyage du four 100 à la deuxième roue 112 de transfert.

Sur le tronçon T0, en aval dudit point D de dévêtissage, les moyens 120 de préhension sont en position active de préhension qui est illustrée sur la figure 5, lesdits moyens 120 étant préférentiellement rappelés élastiquement vers ladite position active par l'organe de rappel formé par le ressort 135 hélicoïdal.

Sur ce tronçon T0, les moyens 120 de préhension sont à vide, ne transportent aucune préforme 10 puisque comme il vient d'être rappelé les préformes 10 sont transférées vers la deuxième roue 112 de transfert au point D de dévêtissage.

Après le point D de dévêtissage, le doigt 156 formant ici l'organe de positionnement angulaire occupe une position illustrée sur la figure 5 correspondant à la position de référence à indexer pour chacune des préformes 10, c'est-à-dire une position dans laquelle le doigt 156 est « à la traine », aligné avec la direction de transport représentée par une flèche T et disposé du côté amont.

Au cours de l'étape de pré-positionnement, on commande sélectivement en rotation chaque actionneur 170 électrique embraqué sur la roue 104 pour pré-positionner angulairement le doigt 156 suivant ledit angle α (alpha) dont la valeur correspond à la position des moyens 30 d'indexation de celle des préformes 10 qui va être prise en charge par les moyens 120 de préhension au point V lors de l'opération de vêtissage.

Pour chaque préforme 10, la valeur de l'angle α (alpha) est par conséquent préalablement déterminée pour permettre de réaliser le pré-positionnement du doigt 156 par l'intermédiaire de l'actionneur 170 électrique.

Le procédé de commande comporte au moins une étape de détection consistant à détecter la position des moyens 30 d'indexation de chaque préforme 10.

Les moyens 30 d'indexation formés ici par une encoche sont utilisés comme référence, ladite position de référence étant déterminée en fonction desdits moyens 30 d'indexation.

L'étape de détection est mise en oeuvre avant le vêtissage d'une préforme 10, par conséquent en amont du four 100.

Les moyens 30 d'indexation de chaque préforme 10 occupe angulairement, autour de leur axe O, une position qui est complètement aléatoire.

Ainsi, l'étape de détection a pour but de déterminer la position réelle des moyens 30 d'indexation afin de pouvoir ensuite l'exploiter pour commander sélectivement chacun des actionneurs 170 électriques lors de l'étape de pré-positionnement du procédé de commande.

L'étape de détection consiste à détecter la position aléatoire des moyens 30 d'indexation de chacune des préformes 10 pour déterminer la valeur dudit angle α qui est utilisée lors de l'étape de pré-positionnement.

Grâce à l'étape de détection, l'organe de positionnement angulaire de chacun des moyens 120 de préhension est ensuite positionné angulairement lors de l'étape de pré-positionnement de manière que ledit organe de positionnement angulaire se trouve ensuite radialement en coïncidence, aligné sur un même rayon, avec les moyens 30 d'indexation lors du vêtissage de la préforme 10 au point V.

Selon le mode de réalisation, le doigt 156 constitue ledit organe de positionnement angulaire (ici solidaire du pignon 136 ou du flasque 142 des moyens 145 de commande desdits moyens 120 de préhension) qui est pré-positionné de manière à être ensuite aligné radialement avec l'encoche 30 formant les moyens d'indexation de la préforme 10.

De préférence, ladite étape de détection est réalisée avec un système 200 de reconnaissance de type optique qui est représenté schématiquement sur la figure 2 et par exemple agencé au niveau de la première roue 110 de transfert.

Avantageusement, chaque préforme 10 est maintenue en position, immobilisée en rotation, sur la première roue 110 de transfert afin de conserver la même position que celle occupée lors de l'étape de détection et cela jusqu'à l'opération de vêtissage de la préforme 10.

A titre d'exemple non limitatif, la première roue 110 de transfert comporte des moyens d'immobilisation des préformes 10 par dépression.

La première roue 110 de transfert comporte par exemple des orifices d'aspiration reliés à une source de dépression de manière à obtenir une force d'aspiration qui est avantageusement appliquée sur le corps 12 de la préforme 10 pour l'immobiliser en rotation.

De préférence, les préformes 10 sont immobilisées en rotation par la force d'aspiration obtenue par dépression sur la portion du parcours de la première roue 110 comprise entre le système 200 de reconnaissance et le point V de vêtissage sur la roue 104 principale du dispositif 102 de convoyage.

Le système 200 de reconnaissance comporte des moyens de reconnaissance (non représentés) aptes à détecter lesdits moyens 30 d'indexation, tels qu'une encoche ou un ergot, d'une préforme 10.

Grâce à un tel système 200 de reconnaissance, on détermine lors de l'étape de détection pour chaque préforme 10 une valeur de l'angle α correspondant à la position réelle des moyens 30 d'indexation formés ici par l'encoche.

A titre d'exemple non limitatif, le document US-8.620.062 décrit un système de reconnaissance de type optique et on pourra s'y reporter pour de plus amples détails.

Ce document décrit plus particulièrement un système de reconnaissance d'une position géométrique de récipients en matière thermoplastique, notamment une préforme, ainsi qu'un procédé comportant en outre une étape de détection de la position géométrique.

Selon les enseignements de ce document, l'étape de détection du procédé est mise en oeuvre à l'aide du système de reconnaissance qui utilise différents moyens de reconnaissance de type « optique » pour déterminer - sans contact direct - la position occupée par la préforme 10.

Le système de reconnaissance comporte des moyens d'évaluation associés à un dispositif de capture d'image qui est agencé de manière à observer la préforme en matière thermoplastique afin d'en capturer une image à résolution spatiale.

La partie observée de la préforme est constituée par la collerette radiale du col, ladite préforme étant éclairée par en dessous par l'intermédiaire de moyens d'éclairage associés, avec interposition d'un corps de lentille entre lesdits moyens d'éclairage et la préforme.

Pour permettre la reconnaissance optique de la position occupée par la préforme, la préforme comporte des moyens d'indexation qui sont constitués selon l'exemple de ce document (et comme illustré à la figure 1) par au moins une encoche.

Selon l'exemple de réalisation représenté sur la figure 1, l'encoche formant les moyens 30 d'indexation est réalisée dans la collerette 20 radiale du col 14, ladite encoche 30 étant destinée à être reconnue par le dispositif de capture d'image dont les images sont ensuite exploitées par les moyens d'évaluation du système 200 de reconnaissance.

Une fois terminée l'étape initiale de détection de la position réelle occupée par l'encoche 30 de la préforme 10, notamment grâce aux moyens d'évaluation associés au dispositif de capture d'image du système 200 de reconnaissance, l'organe 148 de préhension est alors susceptible d'être entraîné en rotation autour de son axe X par l'actionneur 170 électrique lors de l'étape de pré-positionnement.

La préforme 10 est indexée dans ladite position de référence en étant entraînée en rotation autour de son axe O principal par l'un des actionneurs 170 électriques au moins lors de l'étape de pré-positionnement et, le cas échéant, ultérieurement.

Tel qu'illustré par comparaison entre les figures 5 et 6, l'actionneur 170 électrique est commandé sélectivement lors de l'étape de pré-positionnement mise en oeuvre sur le tronçon T0 pour entraîner en rotation les moyens 120 de préhension de la valeur de l'angle α afin d'amener ledit organe de positionnement angulaire, ici le doigt 156, dans une position déterminée.

Selon le mode de réalisation de la figure 4, le doigt 156 est entraîné en rotation par les pattes 188 de l'embout 176 qui est relié à l'actionneur 170 électrique par la tige 174 de liaison.

Le doigt 156 est solidaire en rotation du pignon 136 ou du flasque 142 des moyens 145 de commande, le doigt 156 est ainsi lié en rotation à l'arbre 132 comportant l'organe 148 de préhension.

Simultanément à l'étape de pré-positionnement, le moyen 118 de transport formé par la chaîne continue d'être entraîné en rotation par la roue 104 principale de sorte que chacun des moyens 120 de préhension poursuit son chemin sur le tronçon T0 en direction du point V de vêtissage. En effet, l'étape de pré-positionnement est réalisée en amont dudit point V de vêtissage.

Tel qu'illustré sur les figures 7 et 8, le procédé de commande comporte une étape de vêtissage consistant à commander, sélectivement au point V de vêtissage, des moyens 160 d'actionnement des moyens 120 de préhension pour réaliser le vêtissage de la préforme 10.

De préférence, les moyens 160 d'actionnement sont constitués par les moyens mécaniques conventionnels décrits précédemment dans le mode de réalisation de la figure 4.

Ainsi, en amont du point V de vêtissage, le système à came et galet provoque le coulissement vers le haut de la colonne 166 à l'encontre du ressort 135 de rappel et ce faisant celui de la fourchette 162 qui est en prise sur le fût 140 de la bobine 138 des moyens 145 de commande, ce qui provoque le passage des moyens 120 de préhension de la position active de préhension vers la position inactive.

En variante, le système à came et galet commandant les moyens 160 d'actionnement est configuré pour maintenir les moyens 120 de préhension en position active de préhension sur tout le tronçon T0, c'est-à-dire à partir du point D de dévêtissage.

En position inactive illustrée sur la figure 7, l'organe 148 de préhension est escamoté à l'intérieur du plateau 150 de manière à ne pas interférer avec le col 14 de la préforme 10 amené radialement par la première roue 110 de transfert à l'aplomb des moyens 120 de préhension lors du vêtissage.

Au point V de vêtissage correspondant à la figure 8, le système à came et galet cesse de solliciter les moyens 120 de préhension vers la position inactive en synchronisation avec l'amenée de la préforme 10 par la première roue 110 de transfert de sorte que les moyens 120 de préhension sont alors rappelés élastiquement dans la position active de préhension pour réaliser le vêtissage de la préforme 10.

L'organe 148 de préhension est emmanché ici à l'intérieur de l'ouverture 24 délimitée par le col 14 de la préforme 10 qui est alors solidaire des moyens 120 de préhension.

Dans l'exemple illustré sur la figure 8, les moyens 30 d'indexation de la préforme 10 formés par l'encoche occupe la même position aléatoire lors de l'opération de vêtissage que celle occupée 10 lors de l'étape de détection.

L'encoche 30 est par exemple décalée d'un angle α d'une valeur d'environ 90° par rapport à la position de référence. Bien entendu, il ne s'agit que d'un exemple dès lors que la position aléatoire de l'encoche 30 varie d'une préforme 10 à une autre.

Avantageusement, le procédé de commande comporte au moins une étape d'indexation consistant, entre un point V de vêtissage et un point C de désaccouplement de la roue 104 principale, à entraîner en rotation les moyens 120 de préhension pour indexer la préforme 10 dans ladite position de référence.

De préférence, l'indexation est obtenue en commandant l'actionneur 170 électrique pour entraîner sélectivement en rotation les moyens 120 de préhension associés jusqu'à positionner la préforme 10 dans ladite position de référence.

Tel qu'illustré sur la figure 2, la roue 104 comporte un tronçon T1 qui, consécutif au tronçon T0, s'étend entre le point V de vêtissage et le point C de désaccouplement.

Avantageusement, l'actionneur 170 électrique est commandé de manière à indexer directement la préforme 10 dans ladite position de référence, c'est-à-dire en positionnant le doigt 156 dans la position dite « à la traine » illustrée sur la figure 9.

L'étape d'indexation du procédé de commande consiste ainsi à commander sélectivement chaque actionneur 170 électrique en fonction de la valeur de l'angle α préalablement déterminée lors de l'étape de détection pour, en sens inverse, repositionner le doigt 156 dans la position initiale occupée avant le pré-positionnement et correspondant à la position de référence.

En variante, l'étape d'indexation pourrait aussi être réalisée mécaniquement à l'aide des moyens 158 de guidage formés par les rails qui sont agencés en aval du point C de désaccouplement.

Dans une telle variante, l'actionneur 170 électrique n'est donc pas commandé pour entraîner en rotation les moyens 120 de préhension dans le but de réaliser l'indexation de la préforme 10.

Tel qu'illustré sur la figure 10, en fonction de sa position aléatoire qui déterminée par la valeur de l'angle α, le doigt 156 va entrer en contact avec l'un des rails 158.

La coopération du doigt 156 avec au moins l'un des rails 158 va automatiquement provoquer l'entraînement en rotation des moyens 145 de commande autour de l'axe X jusqu'à ce que ledit doigt 156 atteigne ladite position « à la traine » (correspondant à la position de référence).

En effet, le doigt 156 doit être aligné avec la direction de transport représentée par la flèche T pour passer entre les rails 158 et permettre aux moyens 120 de préhension, solidaires en déplacement du moyens 118 de transport, de poursuivre le parcours de chauffe.

Avantageusement, les rails 158 permettent de garantir que la préforme 10 occupe ladite position de référence avant de poursuivre son parcours sur le premier tronçon de chauffage dit de pénétration du four 100 et constitue une sécurité, indépendamment du fait que l'indexation de la préforme 10 soit réalisée ou pas sur le tronçon T1 par l'actionneur 170 électrique.

En effet, au moment et après le point D de désaccouplement auquel les moyens 160 d'actionnement se désengagent des moyens 145 de commande desdits moyens 120 de préhension, un décalage angulaire par rapport à ladite position de référence pourrait survenir.

Grâce aux rails 158 de guidage, la préforme 10 débute donc normalement le parcours de chauffe dans ladite position de référence.

Avantageusement, la préforme 10 est conditionnée thermiquement suivant une chauffe préférentielle sur les deux tronçons de chauffage, dits de pénétration et de distribution, et non plus un seul comme auparavant.

Cependant, il existe une position critique du doigt 156 pour laquelle les rails 158 ne peuvent néanmoins garantir la position de référence de la préforme 10. Cette position critique correspond à une position du doigt 156 dans laquelle le doigt 156 est diamétralement à l'opposé par rapport à la position de référence.

En effet, le doigt 156 ne serait alors pas en position dite « à la traine » mais comme le doigt 156 se trouve aligné avec le passage délimité par les rails 158 selon la direction de transport, représentée par une flèche T, la position des moyens 120 de préhension ne serait alors pas modifiée.

Par conséquent, on commande avantageusement l'actionneur 170 électrique pour entraîner en rotation les moyens 120 de préhension lorsque la valeur de l'angle α est de 180°, c'est-à-dire une valeur pour laquelle la préforme 10 se retrouverait dans ladite position critique.

Dans cette situation, l'actionneur 170 électrique est commandé pour décaler angulairement la préforme 10 de quelques degrés pour quitter ladite position critique de manière que les rails 158 puissent ensuite coopérer avec le doigt 156 et ce faisant positionner automatiquement la préforme 10 dans la position de référence.

Avantageusement, le procédé de commande comporte une étape d'intervention consistant à commander l'actionneur 170 électrique pour entraîner en rotation les moyens 120 de préhension afin au moins de décaler angulairement lesdits moyens 120 de préhension de manière à quitter ladite position critique.

Ladite étape d'intervention du procédé de commande est mise en oeuvre lorsque le doigt 156 occupe la position critique, après ou sans mise en oeuvre de l'étape d'indexation de la préforme 10 dans ladite position de référence.

Selon une variante non représentée, les moyens 158 de guidage (formés ici par les rails) pourraient être supprimés en fonction notamment du type d'actionneur 170 électrique utilisé.

Tel sera en particulier le cas lorsque les actionneurs 170 électriques sont des moteurs synchrones sans balais, encore appelés « *moteur brushless* ».

Avantageusement, la moteur synchrone est pourvu d'un capteur de position du rotor (comme un codeur) grâce à quoi la position des moyens 120 de préhension est susceptible d'être connue à tout instant et parfaitement maîtrisée, y compris en cas de perte de signal.

Les préformes 10 sont transportées à l'intérieur du four 100 suivant le parcours de chauffe par le dispositif 102 de convoyage.

Tel que décrit précédemment, d'autres rails formant des deuxièmes et troisièmes moyens 158 de guidage sont agencés en amont et en aval du tronçon de chauffage de pénétration pour garantir le maintien de la préforme 10 dans la position de référence, en particulier lorsque les moyens 145 de commande desdits 120 de préhension n'engrènent plus avec une crémaillère comme c'est en outre le cas sur le deuxième tronçon dit de stabilisation du parcours de chauffe dans le four 100.

A partir du point D' d'accouplement, les moyens 145 de commande desdits moyens 120 de préhension sont à nouveau accouplés avec les moyens 160 d'actionnement et, conformément à l'invention, également avec les actionneurs 170 électriques qui sont ainsi susceptibles d'être commandés pour agir sur les moyens 120 de préhension.

Avantageusement, une came est agencée par sécurité en aval du point D' d'accouplement et ici des troisièmes moyens 158 de guidage, ladite came étant destinée à prévenir une panne ou un dysfonctionnement d'un des actionneurs 170 électriques.

De préférence, une came de sécurité (non représentée) est ainsi agencée entre le point D' d'accouplement et le point D de dévêtissage et est configurée pour coopérer avec le doigt 156 afin de garantir que la préforme 10 occupe ladite position de référence.

Avantageusement, le procédé de commande comporte au moins une étape de correction consistant, entre le point D' d'accouplement et le point D de dévêtissage de la roue 104 principale, à entraîner sélectivement en rotation les moyens 120 de préhension suivant un angle donné pour corriger une dérive de position par rapport à ladite position de référence de la préforme 10.

En effet, l'utilisation des pinces 116 lors du transfert des préformes 10 du dispositif 102 de convoyage vers la deuxième roue 112 de transfert peut s'accompagner d'une dérive de position par rapport à la position de référence.

Une telle dérive de position est généralement très faible, de l'ordre de quelques degrés tout au plus, mais est susceptible d'impacter la qualité finale des récipients fabriqués.

Plus généralement, il est parfois aussi nécessaire de procéder à des ajustements par exemple lors de changement de format ou après un contrôle de qualité des récipients fabriqués par l'installation comportant le four 100.

Avantageusement, la mise en oeuvre d'une étape de correction avec les actionneurs 170 électriques en amont du point D de dévêtissage permet notamment de corriger une telle dérive de position.

Grâce à l'étape de correction, on évite une intervention de technicien sur le dispositif 102 de convoyage notamment pour effectuer des réglages de la chaîne fixe formant le moyen 118 de transport.

Avantageusement, l'étape de correction est réalisée automatiquement en relation avec un système de contrôle qui est agencé en aval de l'unité de moulage de récipients à partir des préformes 10 conditionnées thermiquement dans le four 100.

Le système de contrôle comportent par exemple des moyens optiques (caméras, etc.) aptes à permettre de réaliser une inspection des récipients fabriqués, de manière non limitative de tels systèmes de contrôle ou d'inspection sont commercialisés par la société « *Pressco technology Inc.* ».

Avantageusement, l'étape de correction est réalisée après la came de sécurité (non représentée) destinée à prévenir une panne des actionneurs 170 électriques.

Avantageusement, le procédé de commande comporte une étape de réinitialisation consistant, avant l'opération de dévêtissage réalisée au point D, à commander chaque actionneur 170 électrique pour effectuer une réinitialisation de manière à garantir que chacun des moyens 120 de préhension le doigt 156 soit bien positionné « à la traine » tel qu'illustré sur la figure 5.

## Revendications

1. Dispositif (102) de convoyage de préformes (10) en matière thermoplastique pour un four (100) de conditionnement thermique, ledit dispositif (102) de convoyage de préformes (10) comportant au moins une roue (104) principale et une roue (106) auxiliaire dont l'une au moins est entraînée en rotation pour déplacer au moins un moyen (118) de transport auquel sont liés en déplacement des moyens (120) de préhension configurés pour coopérer chacun avec une préforme (10), lesdits moyens (120) de préhension étant aptes à être actionnés par rapport à une préforme (10) - ou réciproquement - entre une position inactive et une position active de préhension, **caractérisé en ce que** ladite roue (104) principale du dispositif (102) de convoyage comporte des actionneurs (170) électriques qui sont commandés sélectivement pour entraîner au moins en rotation lesdits moyens (120) de préhension de manière à indexer ladite préforme (10) dans une position de référence.

2. Dispositif selon la revendication 1, **caractérisé en ce que** les actionneurs (170) électriques embarqués sur la roue (104) principale comportent chacun des moyens (172) de liaison qui sont configurés pour coopérer avec des moyens (145) de commande desdits moyens (120) de préhension de manière à entraîner lesdits moyens (120) de préhension en rotation.

3. Dispositif selon la revendication 2, **caractérisé en ce que** les moyens (145) de commande desdits moyens (120) de préhension comportent au moins un organe (156) de positionnement angulaire desdits moyens (120) de préhension destiné à permettre d'indexer la préforme (10) dans ladite position de référence.

4. Dispositif selon la revendication 3, **caractérisé en ce que** les moyens (172) de liaison comportent des moyens (188) d'entraînement en rotation configurés pour coopérer avec ledit au organe (156) de positionnement.

5. Dispositif selon l'une quelconque des revendications précédentes, **caractérisé en ce que** lesdits moyens (160) d'actionnement sont formés par un système mécanique du type à came et galet qui commande en déplacement au moins un organe (162) d'actionnement apte à coopérer avec les moyens (145) de commande des moyens (120) de préhension pour entraîner lesdits moyens (120) de préhension en translation entre la position active de préhension et la position inactive.

6. Dispositif selon l'une quelconque des revendications 1 à 5, **caractérisé en ce que** lesdits moyens (160) d'actionnement sont formés par lesdits actionneurs (170) électriques qui sont aptes à entraîner en translation lesdits moyens (120) de préhension entre la position active de préhension et la position inactive.

7. Dispositif selon la revendication 6, **caractérisé en ce que** lesdits actionneurs (170) électriques sont chacun constitués par un actionneur linéaire rotatif, tel qu'un moteur de type LinMot^{®}.

8. Procédé de commande d'un dispositif (102) de convoyage de préformes (10) en matière thermoplastique pour un four (100) de conditionnement thermique, ledit dispositif (102) comportant au moins une roue (104) principale et une roue (106) auxiliaire dont l'une au moins est entraînée en rotation pour déplacer au moins un moyen (118) de transport auquel sont liés en déplacement des moyens (120) de préhension configurés pour coopérer chacun avec une préforme (10), lesdits moyens (120) de préhension étant aptes à être actionnés par rapport à une préforme (10) - ou réciproquement - entre une position inactive et une position active de préhension,
dans lequel au moins ladite roue (104) principale comporte des actionneurs (170) électriques qui sont associés auxdits moyens (120) de préhension pour entraîner sélectivement au moins en rotation lesdits moyens (120) de préhension d'une préforme (10) comportant des moyens (30) d'indexation pour indexer ladite préforme (10) dans une position de référence,
ledit procédé de commande comporte au moins une étape de pré-positionnement consistant, entre un point (D) de dévêtissage et un point (V) de vêtissage de la roue (104) principale, à commander sélectivement en rotation l'actionneur (170) électrique pour pré-positionner angulairement les moyens (120) de préhension suivant un angle (α) d'une valeur préalablement déterminée en fonction de la position aléatoire des moyens (30) d'indexation de ladite préforme (10).

9. Procédé de commande selon la revendication 8, **caractérisé en ce que** le procédé de commande comporte au moins une étape de détection consistant à détecter, avant le vêtissage d'une préforme (10), les moyens (30) d'indexation de ladite préforme (10) occupant une position aléatoire de manière à déterminer la valeur dudit angle (α) à utiliser lors de l'étape de pré-positionnement.

10. Procédé de commande selon la revendication 8 ou 9, **caractérisé en ce que** le procédé de commande comporte au moins une étape d'indexation consistant, entre un point (V) de vêtissage et un point (C) de désaccouplement de la roue (104) principale, à commander l'actionneur (170) électrique pour entraîner en rotation les moyens (120) de préhension associés afin d'indexer la préforme (10) dans ladite position de référence.

11. Procédé de commande selon la revendication 10, **caractérisé en ce que**, lorsque un organe (156) de positionnement que comportent des moyens (145) de commande desdits moyens (120) de préhension occupe une position dite critique, le procédé de commande comporte une étape d'intervention consistant à commander l'actionneur (170) électrique pour entraîner en rotation les moyens (120) de préhension afin de décaler angulairement lesdits moyens (120) de préhension de manière à quitter ladite position critique.

12. Procédé de commande selon l'une des revendications 8 à 11, **caractérisé en ce que** le procédé de commande comporte au moins une étape de correction consistant, entre un point (D') d'accouplement et un point (D) de dévêtissage de la roue (104) principale, à entraîner sélectivement en rotation les moyens (120) de préhension suivant un angle donné pour corriger une dérive de position par rapport à ladite position de référence de la préforme (10).

## Patentansprüche

1. Vorrichtung (102) zum Fördern von Vorformen (10) aus thermoplastischem Material für einen Ofen (100) zur thermischen Konditionierung, wobei die Vorrichtung (102) zum Fördern von Vorformen (10) wenigstens ein Hauptrad (104) und ein Hilfsrad (106) aufweist, von denen wenigstens eines drehend angetrieben wird, um wenigstens ein Transportmittel (118) zu bewegen, mit dem Greifmittel (120) bewegungsverbunden sind, die dafür ausgelegt sind, jeweils mit einer Vorform (10) zusammenzuwirken, wobei die Greifmittel (120) bezüglich einer Vorform (10), oder umgekehrt, zwischen einer inaktiven Position und einer aktiven Greifposition betätigbar sind, **dadurch gekennzeichnet, dass** das Hauptrad (104) der Fördervorrichtung (102) elektrische Stellantriebe (170) aufweist, die selektiv gesteuert werden, um die Greifmittel (120) wenigstens drehend anzutreiben, um so die Vorform (10) in einer Referenzposition zu indexieren.

2. Vorrichtung nach Anspruch 1, **dadurch gekennzeichnet, dass** die elektrischen Stellantriebe (170), die auf dem Hauptrad (104) mitgeführt werden, jeweils Verbindungsmittel (172) aufweisen, die dafür ausgelegt sind, mit Mitteln (145) zur Steuerung der Greifmittel (120) zusammenzuwirken, um so die Greifmittel (120) drehend anzutreiben.

3. Vorrichtung nach Anspruch 2, **dadurch gekennzeichnet, dass** die Mittel (145) zur Steuerung der Greifmittel (120) wenigstens ein Organ (156) zur Winkelpositionierung der Greifmittel (120) aufweisen, das dazu bestimmt ist zu ermöglichen, die Vorform (10) in der Referenzposition zu indexieren.

4. Vorrichtung nach Anspruch 3, **dadurch gekennzeichnet, dass** die Verbindungsmittel (172) Drehantriebsmittel (188) aufweisen, die dafür ausgelegt sind, mit dem Positionierungsorgan (156) zusammenzuwirken.

5. Vorrichtung nach einem der vorhergehenden Ansprüche, **dadurch gekennzeichnet, dass** die Betätigungsmittel (160) von einem mechanischen System vom Typ eines Kurven-Rollen-Triebs gebildet werden, welches die Bewegung wenigstens eines Betätigungsorgans (162) steuert, das geeignet ist, mit den Mitteln (145) zur Steuerung der Greifmittel (120) zusammenzuwirken, um die Greifmittel (120) zwischen der aktiven Greifposition und der inaktiven Position translatorisch anzutreiben.

6. Vorrichtung nach einem der Ansprüche 1 bis 5, **dadurch gekennzeichnet, dass** die Betätigungsmittel (160) von den elektrischen Stellantrieben (170) gebildet werden, welche geeignet sind, die Greifmittel (120) zwischen der aktiven Greifposition und der inaktiven Position translatorisch anzutreiben.

7. Vorrichtung nach Anspruch 6, **dadurch gekennzeichnet, dass** die elektrische Stellantriebe (170) jeweils aus einem rotatorischen und linearen Aktuator, wie etwa einem Motor vom Typ LinMot^{®}, bestehen.

8. Verfahren zur Steuerung einer Vorrichtung (102) zum Fördern von Vorformen (10) aus thermoplastischem Material für einen Ofen (100) zur thermischen Konditionierung, wobei die Vorrichtung (102) wenigstens ein Hauptrad (104) und ein Hilfsrad (106) aufweist, von denen wenigstens eines drehend angetrieben wird, um wenigstens ein Transportmittel (118) zu bewegen, mit dem Greifmittel (120) bewegungsverbunden sind, die dafür ausgelegt sind, jeweils mit einer Vorform (10) zusammenzuwirken, wobei die Greifmittel (120) bezüglich einer Vorform (10), oder umgekehrt, zwischen einer inaktiven Position und einer aktiven Greifposition betätigbar sind,
wobei das wenigstens eine Hauptrad (104) elektrische Stellantriebe (170) aufweist, die den Greifmitteln (120) zugeordnet sind, um diese Mittel (120) zum Greifen einer Vorform (10), die Indexierungsmittel (30) zum Indexieren der Vorform (10) in einer Referenzposition aufweist, selektiv wenigstens drehend anzutreiben,
wobei das Verfahren zur Steuerung wenigstens einen Vorpositionierungsschritt umfasst, der darin besteht, zwischen einem Entformungspunkt (D) und einem Aufbringpunkt (V) des Hauptrades (104) selektiv die Drehung des elektrischen Stellantriebs (170) zu steuern, um die Greifmittel (120) gemäß einem Winkel (α) mit einem Wert, der zuvor in Abhängigkeit von der zufälligen Position der Indexierungsmittel (30) der Vorform (10) bestimmt wurde, winkelmäßig vorzupositionieren.

9. Verfahren zur Steuerung nach Anspruch 8, **dadurch gekennzeichnet, dass** das Verfahren zur Steuerung wenigstens einen Erkennungsschritt umfasst, der darin besteht, vor dem Aufbringen einer Vorform (10) die Indexierungsmittel (30) der Vorform (10), die eine zufällige Position einnehmen, zu erkennen, um so den Wert des Winkels (α) zu bestimmen, der im Vorpositionierungsschritt zu verwenden ist.

10. Verfahren zur Steuerung nach Anspruch 8 oder 9, **dadurch gekennzeichnet, dass** das Verfahren zur Steuerung wenigstens einen Indexierungsschritt umfasst, der darin besteht, zwischen einem Aufbringpunkt (V) und einem Abkopplungspunkt (C) des Hauptrades (104) den elektrischen Stellantrieb (170) zu steuern, um die zugeordneten Greifmittel (120) drehend anzutreiben, um die Vorform (10) in der Referenzposition zu indexieren.

11. Verfahren zur Steuerung nach Anspruch 10, **dadurch gekennzeichnet, dass**, wenn ein Positionierungsorgan (156), welches Mittel (145) zur Steuerung der Greifmittel (120) aufweisen, eine sogenannte kritische Position einnimmt, das Verfahren zur Steuerung einen Interventionsschritt umfasst, der darin besteht, den elektrischen Stellantrieb (170) zu steuern, um die Greifmittel (120) drehend anzutreiben, um die Greifmittel (120) winkelmäßig zu verlagern, um so die kritische Position zu verlassen.

12. Verfahren zur Steuerung nach einem der Ansprüche 8 bis 11, **dadurch gekennzeichnet, dass** das Verfahren zur Steuerung wenigstens einen Korrekturschritt umfasst, der darin besteht, zwischen einem Kopplungspunkt (D') und einem Entformungspunkt (D) des Hauptrades (104) die Greifmittel (120) gemäß einem gegebenen Winkel selektiv drehend anzutreiben, um eine Positionsdrift bezüglich der Referenzposition der Vorform (10) zu korrigieren.

## Claims

1. Device (102) for conveying thermoplastic material preforms (10) for use in a heat treatment oven (100), said device (102) for conveying preforms (10) including at least one principal wheel (104) and one auxiliary wheel (106) at least one of which is driven in rotation to move at least one transport means (118) to which are connected in movement holding means (120) each configured to cooperate with a preform (10), said holding means (120) being adapted to be actuated relative to a preform (10) - or vice versa - between an inactive position and an active holding position, **characterized in that** said principal wheel (104) of the conveyor device (102) includes electric actuators (170) that are selectively driven to drive at least in rotation said holding means (120) in such a manner as to index said preform (10) in a reference position.

2. Device according to Claim 1, **characterized in that** the electric actuators (170) carried in the principal wheel (104) each include connecting means (172) that are configured to cooperate with drive means (145) of said holding means (120) in such a manner as to drive said holding means (120) in rotation.

3. Device according to Claim 2, **characterized in that** the drive means (145) of said holding means (120) include at least one member (156) for angularly positioning said holding means (120) and intended to enable indexing of the preform (10) in said reference position.

4. Device according to Claim 3, **characterized in that** the connecting means (172) include rotation drive means (188) configured to cooperate with said at least one positioning member (156).

5. Device according to any one of the preceding claims, **characterized in that** said actuator means (160) are formed by a mechanical system of the cam and roller type that drives in movement at least one actuator member (162) adapted to cooperate with the drive means (145) of the holding means (120) to drive said holding means (120) in translation between the active holding position and the inactive position.

6. Device according to any one of Claims 1 to 5, **characterized in that** said actuator means (160) are formed by said electric actuators (170) that are adapted to drive said holding means (120) in translation between the active holding position and the inactive position.

7. Device according to Claim 6, **characterized in that** said electric actuators (170) each consist of a linear rotary actuator, such as a LinMot^{®} type motor.

8. Method of controlling a device (102) for conveying thermoplastic material preforms (10) for use in a heat treatment oven (100), said device (102) including at least one principal wheel (104) and one auxiliary wheel (106) at least one of which is driven in rotation to move at least one transport means (118) to which are connected in movement holding means (120) each configured to cooperate with a preform (10), said holding means (120) being adapted to be actuated relative to a preform (10)
- or vice versa - between an inactive position and an active holding position,
in which at least said principal wheel (104) includes electric actuators (170) that are associated with said holding means (120) to selectively drive at least in rotation said means (120) for holding a preform (10) and including indexing means (30) for indexing said preform (10) in a reference position,
said control method includes at least one pre-positioning step, carried out between an offloading point (D) and a loading point (V) of the principal wheel (104), consisting in selectively driving the electric actuator (170) in rotation to pre-position angularly the holding means (120) in accordance with an angle (α) with a value previously determined as a function of the random position of the indexing means (30) of said preform (10).

9. Control method according to Claim 8, **characterized in that** the control method includes at least one detection step, carried out before the loading of a preform (10), consisting in detecting the indexing means (30) of said preform (10) occupying a random position in such a manner as to determine the value of said angle (α) to be used during the pre-positioning step.

10. Control method according to Claim 8 or 9, **characterized in that** the control method includes at least one indexing step, carried out between a loading point (V) and a decoupling point (C) of the principal wheel (104), consisting in the electric actuator (170) being driven to drive the associated holding means (120) in rotation in order to index the preform (10) in said reference position.

11. Control method according to Claim 10, **characterized in that**, when a positioning member (156) included in the drive means (145) of said holding means (120) occupies a so-called critical position, the control method includes an intervention step consisting in driving the electric actuator (170) to drive the holding means (120) in rotation in order to offset said holding means (120) angularly in such a manner as to quit said critical position.

12. Control method according to any one of Claims 8 to 11, **characterized in that** the control method includes at least one correction step, carried out between a coupling point (D') and an offloading point (D) of the principal wheel (104), consisting in selectively driving the holding means (120) in rotation through a given angle to correct a positional drift relative to said reference position of the preform (10).
